# EUROPEAN PATENT APPLICATION

(11) **EP 4 332 856 A1**
(43) Date of publication of application: **06.03.2024**
(21) Application number: 22201855.8
(22) Date of filing: 17.10.2022
(51) Int. Cl.: G06Q 10/063, G06Q 50/04

(54) **SYSTEM AND METHOD FOR RECOMMENDING ONE OR MORE ACTIONS TO ENABLE CIRCULAR ECONOMY FRAMEWORK**

(30) Priority: 02.09.2022 EP 22193728
(71) Applicant: Siemens Aktiengesellschaft, 80333 München (DE)
(72) Inventor: GANESH, Gautam, 560030 Bangalore (IN); KAMATH, Yogesh, 560076 Bangalore, Karnataka (IN); KARANTH, Rohit Kota, 560094 Bangalore (IN)
(74) Representative: Patentanwaltskanzlei WILHELM & BECK

(57) **Abstract**

Disclosed is system (100), apparatus (110), and method (200) for recommending actions to enable circular economy framework (302B) across lifecycle of product comprising components in industrial environment. The method comprising determining, by processing unit (135), features for a given phase of lifecycle of product based on information associated with unique identifier of product. The information is stored in knowledge graph comprising semantic information pertaining to pertaining to product, components of product, properties of components of the product and behavior of components of the product at each lifecycle phase of product. The method comprises determining performance indicators pertaining to circular economy framework in industrial environment based on features from knowledge graph for given phase of lifecycle of product. The method comprises recommending actions for given lifecycle phase of product such that determined one or more performance indicators are within predefined range enabling circular economy framework in industrial environment.

## Description

### CROSS-REFERENCE TO RELATED APPLICATIONS

This application claims priority to and the benefit of patent application number EP22193728.7 titled "SYSTEM AND METHOD FOR RECOMMENDING ONE OR MORE ACTIONS TO ENABLE CIRCULAR ECONOMY FRAMEWORK", filed in the European Patent Office on September 02, 2022. The specification of the above referenced patent application is incorporated herein by reference in its entirety.

The present disclosure relates to product life-cycle management and more particularly relates to system and method for sustainable management of life-cycle development of a product comprising one or more components in an industrial environment and recommending one or more actions to enable circular economy framework.

With the development of science and technology, the development engineering produts and/or consumer products in any domain and nature of business is more rapid and uses and uses a huge volume of resources. The current state-of-the-art in manufacturing and designing a product is predominantly a one-way linear flow system (linear economy concept) where costs, material wastes, and negative environmental and social impacts are all continuing to increase rapidly. There is a paradigm shift in moving from linear economy concept to circular economy to achieve a sustainable product development approach. The circular economy framework shifts the paradigm of manufacturing and its core elements: products, processes, and systems to significantly reduce these negative impacts with a view to continuously improve manufacturing productivity and quality at reduced costs. The Circular Economy (CE) concept is a framework promising to simultaneously reduce anthropo-genic emissions while generating business value.

For the circular economy framework to be effective in a real-world environment, there will be massive shift in how the product manufacturing will be executed. The factors such as the product information, the product constituents, physical properties, chemical properties, and biological properties of the product and its constituents, alternatives factoring in the ability to use recycled, reused or recovered materials, and the interactions within the supply chain for working with an inventory should be taken into account. All this while adhering to any compliance aspects of the inventory and its constituents, related to policies and laws of the different regions and countries that the operations are carried out in.

Currently, there is no such method or system available that provides a user with such heterogeneous data about products/materials, their properties, their processing capabilities, behaviors under different operating, storage and transportations conditions, adherence to compliance related to such factors across geographic regions and so on, to gain timely and effective insights for decision making and supply chain interactions. Also, often handling of different lifecycle phases of the product may belong to different vendors and manufactures. Therefore, another challenge is collection, authenticity, processing of the data for different lifecycle phases of the product. Henceforth, accurate prediction of life expectancy in operational phase is limited as there is no exchange of meaningful data among various lifecycle phases of the asset Furthermore, the existing approaches use traditional "non-semantic" methods to manage the data and are usually confined to an industry vertical. Moreover, there is no such existing approach available that effectively manage this heterogeneous data throughout the life-cycle of the product. Such a kind of data management and extraction of contextual insights, to drive circular economy workflows, requires an integrated and semantic treatment that understands the aspects of circularity, which is currently missing. The current systems and methods are incapable of providing a scalable solution that provides insights about a guided circularity framework and provides recommendations throughout the life-cycle of a product on sustainable management of the product.

In light of the above, there is a need for a vertical-agnostic knowledge graph driven approach that would give an integrated 360-degree view of the various aspects of products and constituent materials as well as semantically contextualizing the underlying data which aids in extraction of knowledge driven insights for enabling the circular economy framework.

Therefore, it is an object of the present invention to provide system and method for sustainable management of life-cycle development of a product comprising one or more components in an industrial environment and recommending one or more actions to ensure circular economy framework.

The term "product" refers to any device, system, instrument or machinery manufactured or used in an industry that may be employed for performing an operation or service. Examples of products include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. In another example, the term "product" may also refer to consumer goods such as food, clothing, vehicles, electronics, and appliances. In one or more examples, the term "product" may also encompass one or more components of the product. For example, if the product is a motor, then the one or more components may inlcude a power source, a commutator, a field magnet, an armature core, an armature coil, brushes, and a rotating shaft. For the purpose of this disclosure, the term "one or more components" may also include the constituent materials of the product. In some examples, the constituent materials maybe one of metals, fibers, wood, glass, ceramics, and composites. It shall be appreciated that the constituent materials vary industrial environment. For example, if the industrial environment is a factory manufacturing clothes, then the product is "clothes" and the constituent materials are cotton, silk, leather, wool, synthetic polymers, plastics, wood, metals, cellulosic fibers etc. In another example, if the industrial environment, is a factory manufacturing automobile, then the product is an "automobile" having constituent materials as cast iron and steel, aluminum alloys, plastics, rubber, glass, non-ferrous alloys, fiber glass, lead, copper, titanium, magnesium and so forth. In another example, if the industrial environment is construction, then the product is a "building" and the constituent materials are iron, aluminum, copper, clay, sand, gravel, limestone, wood, stone, concrete, plastics, and the like.

Further, the product may be associated with a local memory unit such as a Programmable Read-Only-Memory (PROM), a microcontroller and so on. The local memory unit stores a unique identifier associated with the product or one or more entities associated with the product. In one example, the unique identifier may be for example, a numeric string or a alphanumeric string that uniquely identifies the asset. The unique identifier may be assigned to the product or the one or more components by an Original Equipment Manufacturer. In another example, the unique identifier may be assigned by another entity, for example, an end-user of the product, a designer of the product, an owner of the product, a manufacturer of the product, supplier of materials of the product, or any other entity that have ownership of the product. In one embodiment, the local memory unit may be mechanically coupled to the product. In another embodiment, the local memory unit may be associated with another system, for example, a workstation, a personal computer, a personal digital assistant (PDA) and so on.

The object of the present invention is achieved by a computer-implemented method for recommending one or more actions to enable a circular economy framework across a lifecycle of a product comprising one or more components in an industrial environment. Throughout the present disclosure, the term 'circular economy framework' (also called circularity and CE) refers to a model of production and consumption of a product, which involves sharing, leasing, reusing, repairing, refurbishing and recycling existing materials and products as long as possible. CE aims to tackle global challenges as climate change, biodiversity loss, waste, and pollution by emphasizing the design-based implementation of the three base principles of the model. The three principles required for the transformation to a circular economy are: eliminating waste and pollution, circulating products and materials, and the regeneration of nature. Circular economy strives to minimize negative environmental impacts through qualitative transformation coupled with the closure and deceleration of material cycles. Circular economy approaches can take effect in the various stages of the lifecycle of the product enabling longevity, recycling and repairability or biodegradability of the product.

In an embodiment, the lifecycle phases of the product comprise at least one of: a design phase of the product, a sourcing phase of the product, a manufacturing phase of the product, a processing phase of the product, a storage phase of the product, a transportation phase of the product, an operation phase of the product, and a product end of life phase. Advantageously, the present ivnention aims at ensuring the circular economy famework at each of the phases of the lifecycle of the product.

The method comprises determining one or more features for a given phase of the lifecycle of the product based on information associated with a unique identifier of the product. The information is stored in a knowledge graph comprising semantic information pertaining to the product, one or more components, properties of the one or more components, and behavior of the one or more components of the product at each phase of the lifecycle of the product.

In an embodiment, the one or more features for the given lifecycle phase of the product is at least one of: physical properties of the materials of the product, chemical properties of the materials of the product, biological properties of the properties of the product, design and production information, legal compliance requirements of the product, transportation and logistics information, usage and operation information of the product, disassembly and reversibility information of the product, and reuse and recycling information of the product.

In an embodiment, the method of determining the one or more features for the given phase of the lifecycle of the product comprises generating the knowledge graph based on an ontology comprising one or more nodes having semantic information pertaining to properties and behavior of the one or more components of the product at each lifecycle phase of the product. The method of creating the ontology comprises assigning one or more classes to the one or more nodes of the ontology. Herein, each of the one or more nodes have data attributes. The method comprises determining relationships between the one or more nodes. Herein, the relationships correspond to object properties of the ontology. The method comprises creating an ontology based on the one or more classes and relationships therebetween. Furthermore, the knowledge grph is enriched by underlying axioms and restrictions.

In an embodiment, the method comprises generating the knowledge graph using data from one or more data sources associated with development and operation of the product through different phases of the lifecycle of the product. The method of generating the knowledge graph based on the ontology comprises acquiring data from one or more data sources associated with development and operation of the product through different phases of the lifecycle of the product. Herein, the data comprises at least one of: physical properties of materials of the product, chemical properties of the materials of the product, biological properties of the properties of the product, design and production information, transportation and logistics information, usage and operation information of the product, disassembly and reversibility information of the product, and reuse and recycling information of the product. The method of generating the knowledge graph based on the ontology comprises associating the acquired data to the one or more nodes and one or more links between the one or more nodes based on semantic relationships between the data. The method of generating the knowledge graph based on the ontology comprises classifying the one or more nodes into one or more categories corresponding to one or more phases of the lifecycle of the product. The method of generating the knowledge graph based on the ontology comprises arranging the one or more nodes into one or more layers under the one or more categories by establishing a relationship between different lifecycle phases of the product based on the classification. The method of generating the knowledge graph based on the ontology comprises generating the knowledge graph from the collected data based on the arrangement and the created ontology.

In an embodiment, the method further comprises assigning the unique identifier to one or more entities in the industrial environment. Herein, the unique identifier is linked to the generated knowledge graph.

The method comprises determining one or more performance indicators pertaining to the circular economy framework in the industrial environment based on the determined one or more features from the knowledge graph for the given phase of the lifecycle of the product.

The method comprises recommending one or more actions for the given phase of the lifecycle of the product based on the knowledge graph such that the determined one or more performance indicators are within a predefined range enabling circular economy framework in the industrial environment.

In an embodiment, the method of recommending one or more actions for the determined lifecycle phase of the product comprises at least one of: material selection for manufacturing, supplier selection for sourcing material, resource planning, circular product design, material recovery, material reuse, reduction of costs, and reduction of waste material.

In an embodiment, the method of recommending one or more actions based on the determined one or more features of the product further comprises determining a type and supplier of material based on the determined one or more performance indicators to enable circular economy framework in the industrial environment. The method comprises recommending the determined type and supplier of material to a user on a graphical user interface.

In an embodiment, the method of recommending one or more actions based on the extracted one or more features of the product further comprises determining a type of source of the determined material for manufacturing the product, wherein the type of source of material as at least one of: primary source, secondary source, or a combination thereof based on the one or more parameters to enable circular economy framework in the industrial environment. Further, the method comprises recommending the type of source of the determined material for manufacturing the product to the user on a graphical user interface.

In an embodiment, the method of recommending one or more actions based on the extracted one or more features of the product comprises predicting one or more anomalies in the one or more components of the product based on the one or more features derived from the generated knowledge graph. The method comprises recommending one or more actions based on the predicted anomalies to enable circular economy framework in the industrial environment.

In an embodiment, the method of recommending one or more actions based on the determined one or more features of the product further comprises determining a pattern in frequently occurring anomalies in the one or more components of the product during an operation phase of the product. The method comprises identifying a link between the frequently occurring anomalies in the one or more components of the product and a particular feature of the product extracted from the knowledge graph based on the unique identifier of the one or more components of the product. The method comprises recommending one or more actions to amend product development process in order to reduce frequently occurring anomalies in the one or more components of the product during the operation phase.

In an embodiment, the method of recommending one or more actions based on the determined one or more features of the product further comprises determining a severity of the determined anomalies of the one or more components of the product. The method comprises recommending whether a component of the product is to be repaired or replaced based on the determined severity of the determined anomalies of the one or more components of the product.

In an embodiment, the method of recommending one or more actions based on the extracted one or more features of the product further comprises classifying the one or more components of the product under one or more labels based on the generated knowledge graph to enable circular economy framework in the industrial environment, wherein the one or more labels is any one of: to be reused, to be recycled and to be discarded. The method comprises recommending, by the processing unit, one or more actions to re-introduce the one or more replaced components of the product into the product development lifecycle based on the classification.

The object of the present invention is achieved by an apparatus for recommending one or more actions to enable a circular economy framework across a lifecycle of a product comprising one or more components in an industrial environment. The apparatus comprises one or more processing units and a memory unit communicatively coupled to the one or more processing units. The memory unit comprises module stored in the form of machine-readable instructions executable by the one or more processing units, wherein the module is configured to perform the aforementioned steps.

The object of the present invention is also achieved by a system for recommending one or more actions to enable a circular economy framework across a lifecycle of a product comprising one or more components in an industrial environment. The system comprises a database comprising semantic information pertaining to properties and behavior of the one or more components of the product at each lifecycle phase of the product. The system comprises an apparatus communicatively coupled to the database. Herein, the apparatus includes a module is configured to perform one or more aforementioned method steps.

The object of the present invention is also achieved by a computer-program product having machine-readable instructions stored therein, which when executed by one or more processing units, cause the processing units to perform a method as described above.

The object of the present invention is also achieved by a computer readable medium on which program code sections of a computer program are saved, the program code sections being loadable into and/or executable in a system to make the system execute the method as described above, when the program code sections are executed in the system as described above.

The above-mentioned attributes, features, and advantages of this invention and the manner of achieving them, will become more apparent and understandable (clear) with the following description of embodiments of the invention in conjunction with the corresponding drawings. The illustrated embodiments are intended to illustrate, but not limit the invention.

The present invention is further described hereinafter with reference to illustrated embodiments shown in the accompanying drawings, in which:
The present invention is further described hereinafter with reference to illustrated embodiments shown in the accompanying drawings, in which:
- FIG 1A: illustrates a system for recommending one or more actions to enable a circular economy framework across a lifecycle of a product comprising one or more components in an industrial environment, in accordance with one embodiment of the present invention;
- FIG 1B: illustrates an apparatus of the system of FIG 1 for recommending one or more actions to enable a circular economy framework across a lifecycle of a product comprising one or more components in an industrial environment, in accordance with an embodiment of the present disclosure;
- FIG 2: illustrates a flowchart depicting steps of a method for recommending one or more actions to enable a circular economy framework across a lifecycle of a product comprising one or more components in an industrial environment, in accordance with an embodiment of the present disclosure;
- FIG 3: illustrates flowchart of a state of the art framework of linear model and circular model in an industrial environment, in accordance with one embodiment of the present invention;
- FIG 4: illustrates a graphical representation depicting an ontology created for a product in the industrial environment, in accordance with an embodiment of the present invention; and
- FIG 5: illustrates flowchart depicting interaction between different life-cycle phases of the product in the industrial environment, in accordance with an embodiment of the present invention.

Hereinafter, embodiments for carrying out the present invention are described in detail. The various embodiments are described with reference to the drawings, wherein like reference numerals are used to refer to like elements throughout. In the following description, for purpose of explanation, numerous specific details are set forth in order to provide a thorough understanding of one or more embodiments. It may be evident that such embodiments may be practiced without these specific details. Disclosed embodiments provide systems and methods for for sustainable management of life-cycle development of a product comprising one or more components in an industrial environment and recommending one or more actions to ensure circular economy framework.

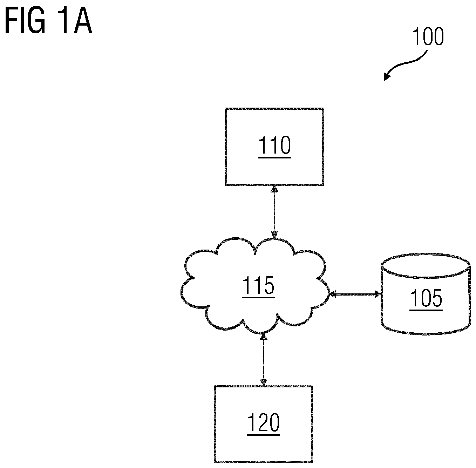

FIG 1A illustrates a block-diagram of a system 100 for recommending one or more actions to enable a circular economy framework across a lifecycle of a product comprising one or more components in an industrial environment, in accordance with an embodiment of the present invention. As used herein, the term "industrial environment" as used herein refers to a complex industrial set-up including design, manufacturing, storing, transportation, and operation processes of the product. Examples of an industrial environment may include a complex industrial set-up such as a manufacturing facility, process plants, storage facility, transportation. It will be appreciated that the industrial envornment may refer to any vertical and/or domain in bussiness. For example, different verticals treated as industrial environemnt for the purpose of this disclosure, may include but not limited to automobiles, textiles, every distribution, energy production, buildings, factories, and medical equipment.

Throughout the present disclosure, the term "product" refers to any device, system, instrument or machinery manufactured or used in an industry that may be employed for performing an operation or service. Examples of products include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. In another example, the term "product" may also refer to consumer goods such as food, clothing, vehicles, electronics, and appliances. In one or more examples, the term "product" may also encompass one or more components of the product. For example, if the product is a motor, then the one or more components may inlcude a power source, a commutator, a field magnet, an armature core, an armature coil, brushes, and a rotating shaft. For the purpose of this disclosure, the term "one or more components" may also include the constituent materials of the product. In some examples, the constituent materials maybe one of metals, fibers, wood, glass, ceramics, and composites. It shall be appreciated that the constituent materials vary industrial environment. For example, if the industrial environment is a factory manufacturing clothes, then the product is "clothes" and the constituent materials are cotton, silk, leather, wool, synthetic polymers, plastics, wood, metals, cellulosic fibers etc. In another example, if the industrial environment, is a factory manufacturing automobile, then the product is an "automobile" having constituent materials as cast iron and steel, aluminum alloys, plastics, rubber, glass, non-ferrous alloys, fiber glass, lead, copper, titanium, magnesium and so forth. In another example, if the industrial environment is construction, then the product is a "building" and the constituent materials are iron, aluminum, copper, clay, sand, gravel, limestone, wood, stone, concrete, plastics, and the like.

Throughout the present dislcosure, the term 'lifecycle of the product' refers to the length of time starting from designing a product till the end of life phase of the product. Throughout the present disclsoure, the term 'phase' of the lifecycle of the product refers to stages that a particular product goes through until end of the life of the product. The different phases of the lifecycle of the product may include a design phase of the product, a sourcing phase of the product, a manufacturing phase of the product, a processing phase of the product, a storage phase of the product, a transportation phase of the product, an operation phase of the product, and a product end of life phase. The product in the different lifecycle phases may be handled/governed by different vendors.

Throughout the present disclosure, the term 'circular economy framework' (also called circularity and CE) refers to a model of production and consumption of a product, which involves sharing, leasing, reusing, repairing, refurbishing and recycling existing materials and products as long as possible. CE aims to tackle global challenges as climate change, biodiversity loss, waste, and pollution by emphasizing the design-based implementation of the three base principles of the model. The three principles required for the transformation to a circular economy are: eliminating waste and pollution, circulating products and materials, and the regeneration of nature. Circular economy strives to minimize negative environmental impacts through qualitative transformation coupled with the closure and deceleration of material cycles. Circular economy approaches can take effect in the various stages of the lifecycle of the product enabling longevity, recycling and reparability or biodegradability of the product.

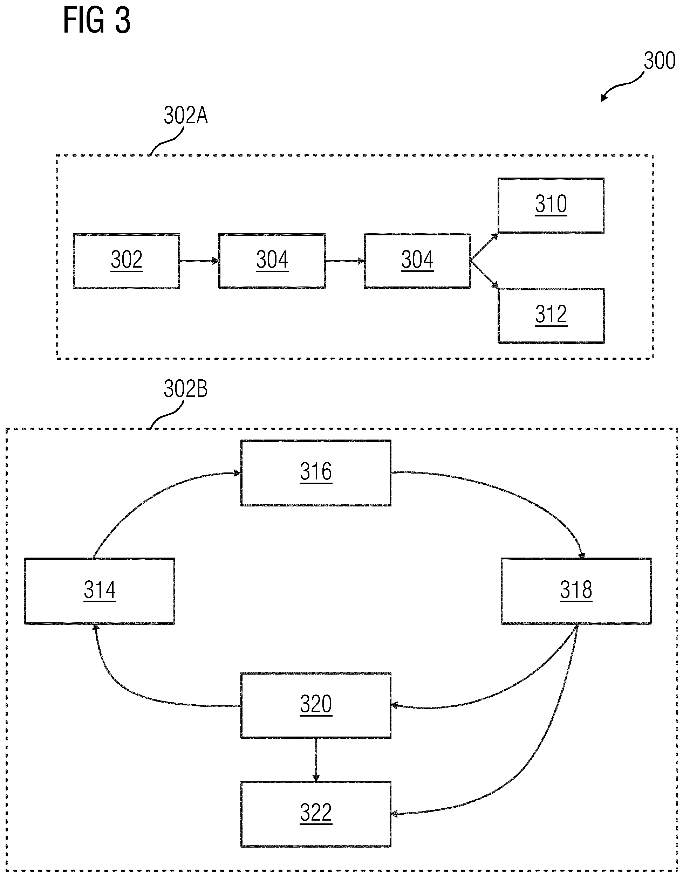

Circular economy is defined in contradiction to the traditional linear economy as shown in FIG 3. Referring to FIG 3, illustrated is a flowchart 300 of a state of the art framework of linear model and circular model in an industrial environment, in accordance with one embodiment of the present invention. The linear economy framework is represented as 300A and circular economy framework is represented as 300B. As shown, the linear economy framework 300A is the state-of-the-art framework in manufacturing and designing a product. The linear economy framework 300A defines the lifecycle of the product as design phase 302, build phase 304, use and operate phase 306, repurpose phase 308 and demolition phase 310. As maybe seen in flowchart 300A, the linear economy framework is predominantly a one-way linear flow system (linear economy concept) where costs, material wastes, and negative environmental and social impacts are all continuing to increase rapidly. There is a paradigm shift in moving from linear economy concept to circular economy to achieve a sustainable product development approach. As shown, the circular economy framework 300B is a model of production and consumption of a product including designing, producing, manufacturing, operating, using, sharing, leasing, reusing, repairing, refurbishing, and recycling existing materials and products as long as possible. The circular economy framework 300B defines the lifecycle of the product as redesign phase 314, rebuild phase 316, reuse and reoperate phase 318, repurpose phase 320 and demolition phase 322. Therefore, with the basic principles of a circular economy such as reuse,, repair, refurbishment, remanufacturing and recycling create a closed-loop system reducing the use of resource inputs and the creation of waste, pollution and carbon emissions. The circular economy framework 300B aims to keep products, materials, equipment and infrastructure in use for longer, thus improving the productivity of these resources. The aim of of circular economy framework 300B is to ensure that the resources used can serve as starting materials for new, pollutant-free products after they have been used. This allows them to circulate continuously in product cycles - instead of "downcycling", the aim is to enable "upcycling" of products, theereby creating a positive footprint suitable for the biosphere and the techno-sphere.

The system 100 comprises a database 105 communicatively connected to an apparatus 110 via the network 115 (such as Local Area Network (LAN), Wide Area Network (WAN), Wi-Fi, Internet, any short range or wide range communication). The apparatus 110 is also connected to the one or more user devices 120 via the network 115. Non-limiting examples of user devices 120 include, personal computers, workstations, personal digital assistants, human machine interfaces. The user device 120 may enable the user to input one or more queries or a set of requirements through a web-based interface at a particular lifecycle phase of the product. Upon receiving the set of requirements, queries, or requests from the user, the network 115 transmits a request for recommending one or more actions to enable circular economy framework to the apparatus 110.

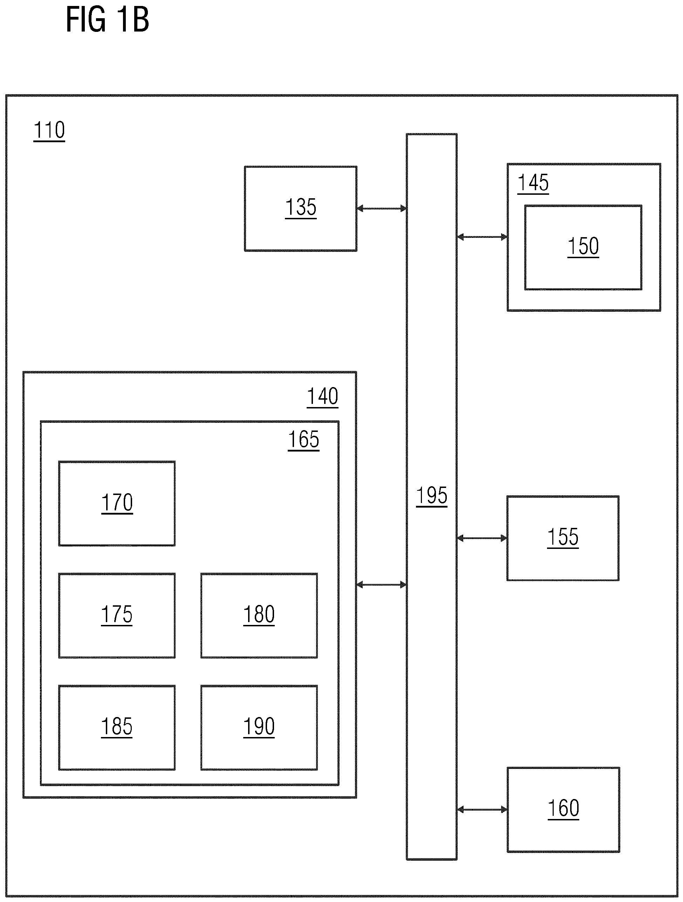

In the present embodiment, the apparatus 110 is deployed in a cloud computing environment. As used herein, "cloud computing environment" refers to a processing environment comprising configurable computing physical and logical resources, for example, networks, servers, storage, applications, services, etc., and data distributed over the network 120, for example, the internet. The cloud computing environment provides on-demand network access to a shared pool of the configurable computing physical and logical resources. The apparatus 110 may include a module (shown in FIG 1B) that provides sustainable management of life-cycle development of a product comprising one or more components in an industrial environment and recommends one or more actions to enable circular economy framework. Additionally, the apparatus 110 may include a network interface for communicating with the user devices 120 via the network 115.

In another embodiment, the apparatus 110 can be an edge computing device. As used herein "edge computing" refers to computing environment that is capable of being performed on an edge device (e.g., connected to sensing units in an industrial setup and one end and to a remote server(s) such as for computing server(s) or cloud computing server(s) on other end), which may be a compact computing device that has a small form factor and resource constraints in terms of computing power. A network of the edge computing devices can also be used to implement the apparatus 110. Such a network of edge computing devices is referred to as a fog network.

Referring to FIG 1B, illustrated is an apparatus 110 of the system 100 of FIG 1A for recommending one or more actions to enable a circular economy framework across a lifecycle of a product comprising one or more components in an industrial environment, in accordance with an embodiment of the present disclosure. The apparatus 110 comprises a processing unit 135, a memory unit 140, a storage unit 145, an input unit 155, an output unit 160 and a standard interface or bus 195, as shown in FIG 1B. The apparatus 110 can be a computer, a workstation, a virtual machine running on host hardware, a microcontroller, or an integrated circuit. As an alternative, the apparatus 110 can be a real or a virtual group of computers (the technical term for a real group of computers is "cluster", the technical term for a virtual group of computers is "cloud").

The term 'processing unit' 135, as used herein, means any type of computational circuit, such as, but not limited to, a microprocessor, microcontroller, complex instruction set computing microprocessor, reduced instruction set computing microprocessor, very long instruction word microprocessor, explicitly parallel instruction computing microprocessor, graphics processor, digital signal processor, or any other type of processing circuit. The processing unit 135 may also include embedded controllers, such as generic or programmable logic devices or arrays, application specific integrated circuits, single-chip computers, and the like. In general, a processing unit 135 may comprise hardware elements and software elements. The processing unit 135 can be configured for multi-threading, i.e. the processing unit 135 may host different calculation processes at the same time, executing the either in parallel or switching between active and passive calculation processes.

The memory unit 140 may be volatile memory and non-volatile memory. The memory unit 140 may be coupled for communication with the processing unit 135. The processing unit 135 may execute instructions and/or code stored in the memory unit 140. A variety of computer-readable storage media may be stored in and accessed from the memory unit 140. The memory unit 140 may include any suitable elements for storing data and machine-readable instructions, such as read only memory, random access memory, erasable programmable read only memory, electrically erasable programmable read only memory, a hard drive, a removable media drive for handling compact disks, digital video disks, diskettes, magnetic tape cartridges, memory cards, and the like.

The memory unit 140 comprises the module 165 in the form of machine-readable instructions on any of the above-mentioned storage media and may be in communication to and executed by the processing unit 135. The following description explains functions of the modules when executed by the one or more processing units 135. The module 165 comprises a tagging module 170, a knowledge graph generation module 175, an extraction module 180, performance indicator determination module 185, a recommendation module 190.

The tagging module 170 is configured for tagging a product with a unique identifier (UID) that uniquely identifies the product throughout the lifecycle of the product. Furthermore, the tagging module 170 is configured for tagging one or more entities in the industrial environment with the unique identifier. The one or more entities such as the product, one or more components, one or more suppliers, one or more government bodies, one or more legal bodies, and so forth are linked to the unique identifier of the given product. The tagging module 170 is configured to tag all information related to a given product with the same unique identifier. The information pertaining to the product maybe one or more components, one or more constituent materials, physical properties of materials of the product, chemical properties of the materials of the product, biological properties of the properties of the product, design and production information, transportation and logistics information, usage and operation information of the product, disassembly and reversibility information of the product, and reuse and recycling information of the product and so forth.

The knowledge graph generation module 175 is configured for generating a knowledge graph of the product based on an ontology. The knowledge graph generation module 175 is configured for acquiring data from one or more data sources associated with development and operation of the product through different phases of the lifecycle of the product. The data comprises at least one of: physical properties of materials of the product, chemical properties of the materials of the product, biological properties of the properties of the product, design and production information, transportation and logistics information, usage and operation information of the product, disassembly and reversibility information of the product, and reuse and recycling information of the product. The knowledge graph generation module 175 is configured for associating the acquired data to the one or more nodes and one or more links between the one or more nodes of the ontology based on semantic relationships between the data. The knowledge graph generation module 175 is configured for classifying the one or more nodes into one or more categories corresponding to one or more phases of the lifecycle of the product such as a design phase of the product, a sourcing phase of the product, a manufacturing phase of the product, a processing phase of the product, a storage phase of the product, a transportation phase of the product, an operation phase of the product, and a product end of life phase. Further, the knowledge graph generation module 175. is configured for arranging the one or more nodes into one or more layers under the one or more categories by establishing a relationship between different lifecycle phases of the product based on the classification. Further, the knowledge graph generation module 175 is configured for generating the knowledge graph from the collected data based on the arrangement and the created ontology.

The extraction module 180 is configured for determining one or more features for a given phase of the lifecycle of the product based on information associated with a unique identifier of the product. The one or more features can be at least one of: physical properties of the materials of the product, chemical properties of the materials of the product, biological properties of the properties of the product, design and production information, legal compliance requirements of the product, transportation and logistics information, usage and operation information of the product, disassembly and reversibility information of the product, and reuse and recycling information of the product. The extraction module 180 is configured for extracting relevant information from the knowledge graph by tracing the unique identifier associated with the product and tracing the knowledge graph based on semantic relationships between the properties and behavior of the product as pre-learned in the knowledge graph. The extraction module 180 is configured for extracting/determining one or more features from the knowledge graph via multiple techniques. In some examples, the one or more features are determined by simply traversing the knowledge graph. In other examples, the knowledge graph is a Resource Description Framework (RDF) based knowledge graph and then the one or more features are determined using data inferencing techniques on the RDF. In other examples, the one or more features are determined using artificial intelligence models on the knowledge graph to determine missing links and axioms in order to deduce further knowledge from the knowledge graph.

The performance indicator determination module 185 is configured for determining one or more performance indicators pertaining to the circular economy framework in the industrial environment based on the determined one or more features from the knowledge graph for the given phase of the lifecycle of the product. The one or more performance indicators are based on basic components of the circular economy framework. In an example, the performance indicator is a sustainability index. The sustainability index can be calculated as a function of waste reduction score, material circularity score, environmental impact score, legal compliance score, carbon footprint score and the like.

The recommendation module 190 is configured for recommending one or more actions for the given phase of the lifecycle of the product based on the knowledge graph such that the determined one or more performance indicators are within a predefined range enabling circular economy framework in the industrial environment. The one or more actions maybe at least one of: material selection for manufacturing, supplier selection for sourcing material, resource planning, circular product design, material recovery, material reuse, reduction of costs, and reduction of waste material. In an example, the one or more recommendations are generated in order to improve the sustainability index of the product such that the sustainability index is within a predefined range for the product. It will be appreciated that the sematic information stored in the knowledge graph pertaining to the product is used to inference insights for the particular product at the given phase of the lifecycle of the product. The knowledge graph thus is capable of generating recommendations that improve the sustainability index of the product based on the insights inferred. The recommendation module 190 is configured for presenting the one or more recommendations on a graphical user interface associated with the user device 120.

The apparatus 110 further comprises a storage unit 145. The storage unit 145 may be a non-transitory storage medium which stores the database 150. In one example, the database 150 may be an ontology. In another example, the database 150 is the knowledge graph generated based on the ontology. The knowledge graph 150 may store semantically linked information pertaining to properties and behaviour of a product throughout the lifecycle phases of the product. The apparatus 110 may further comprise an input unit 155 and an output unit 160. The input unit 155 may include input devices such as keypad, touch-sensitive display, camera (such as a camera receiving gesture-based inputs), etc., AR/VR headsets capable of receiving input signals such as requests for generating recommendations, manually entering new product related infromation, updates to the product, changes in legal & environmental compliances for a given product, and the like. The output unit 160 may be a device with a graphical user interface displaying the one or more recommendations to enable circular economy framework for the product and the like. The bus 195 acts as interconnect between the processing unit 135, the memory 140, the storage unit 145, the input unit 155, and the output unit 160.

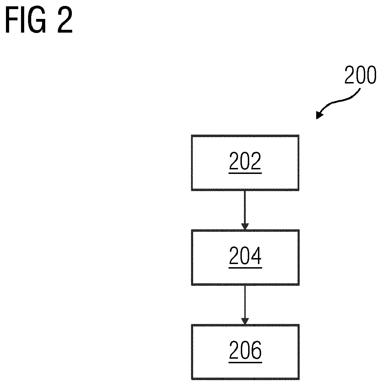

Those of ordinary skilled in the art will appreciate that the hardware depicted in FIGS 1 and 2 may vary for different implementations. For example, other peripheral devices such as an optical disk drive and the like, Local Area Network (LAN)/ Wide Area Network (WAN)/ Wireless (e.g., Wi-Fi) adapter, graphics adapter, disk controller, input/output (I/O) adapter, network connectivity devices also may be used in addition or in place of the hardware depicted. The depicted example is provided for the purpose of explanation only and is not meant to imply architectural limitations with respect to the present invention.

A system 100 in accordance with an embodiment of the present invention includes an operating system employing a Graphical User Interface. The operating system permits multiple display windows to be presented in the Graphical User Interface simultaneously with each display window providing an interface to a different application or to a different instance of the same application. A cursor in the Graphical User Interface may be manipulated by a user through the pointing device. The position of the cursor may be changed and/or an event such as clicking a mouse button, generated to actuate a desired response.

One of various commercial operating systems, such as a version of Microsoft Windows^{™} may be employed if suitably modified. The operating system is modified or created in accordance with the present invention as described.

The present invention is not limited to a particular computer system platform, processing unit, operating system, or network. One or more aspects of the present invention may be distributed among one or more computer systems, for example, servers configured to provide one or more services to one or more client computers, or to perform a complete task in a distributed system. For example, one or more aspects of the present invention may be performed on a client-server system that comprises elements distributed among one or more server systems that perform multiple functions according to various embodiments. These elements comprise, for example, executable, intermediate, or interpreted code, which communicate over a network using a communication protocol. The present invention is not limited to be executable on any particular system or group of systems, and is not limited to any particular distributed architecture, network, or communication protocol.

FIG 2 depicts a flowchart depicting steps of a method 200 for recommending one or more actions to enable a circular economy framework across a lifecycle of a product comprising one or more components in an industrial environment, in accordance with an embodiment of the present disclosure. At step 202, one or more features are determined for a given phase of the lifecycle of the product based on information associated with a unique identifier of the product. The information is stored in a knowledge graph comprising semantic information pertaining to the product, one or more components of the product, properties of the one or more components of the product, and behavior of the one or more components of the product at each phase of the lifecycle of the product. The product may be an outcome of a process in an industrial environment which maybe be a complex industrial set-up including design, manufacturing, storing, transportation, and operation processes of the product. Examples of an industrial environment may include a complex industrial set-up such as a manufacturing facility, process plants, storage facility, transportation and so forth. The product maybe for any vertical and/or domain in bussiness such as automobiles, textiles, every distribution, energy production, buildings, factories, and medical equipment.

The term "product" refers to any device, system, instrument or machinery manufactured or used in an industry that may be employed for performing an operation or service. Examples of products include any machinery in a technical system or technical installation/facility such as motors, gears, bearings, shafts, switchgears, rotors, circuit breakers, protection devices, remote terminal units, transformers, reactors, disconnectors, gear-drive, gradient coils, magnet, radio frequency coils etc. Example technical systems include turbines, large drives, Magnetic Resonance Imaging (MRI) scanner, etc. In another example, the term "product" may also refer to consumer goods such as food, clothing, vehicles, electronics, and appliances. In one or more examples, the term "product" may also encompass one or more components of the product. For example, if the product is a motor, then the one or more components may inlcude a power source, a commutator, a field magnet, an armature core, an armature coil, brushes, and a rotating shaft. For the purpose of this disclosure, the term "one or more components" may also include the constituent materials of the product. In some examples, the constituent materials maybe one of metals, fibers, wood, glass, ceramics, and composites. It shall be appreciated that the constituent materials vary industrial environment. For example, if the industrial environment is a factory manufacturing clothes, then the product is "clothes" and the constituent materials are cotton, silk, leather, wool, synthetic polymers, plastics, wood, metals, cellulosic fibers etc. In another example, if the industrial environment, is a factory manufacturing automobile, then the product is an "automobile" having constituent materials as cast iron and steel, aluminum alloys, plastics, rubber, glass, non-ferrous alloys, fiber glass, lead, copper, titanium, magnesium and so forth. In another example, if the industrial environment is construction, then the product is a "building" and the constituent materials are iron, aluminum, copper, clay, sand, gravel, limestone, wood, stone, concrete, plastics, and the like.

Any product in the industrial environment may go through different phases throughout the lifecycle of the product. In an embodiment, the lifecycle phases of the product comprise at least one of: a design phase of the product, a sourcing phase of the product, a manufacturing phase of the product, a processing phase of the product, a storage phase of the product, a transportation phase of the product, an operation phase of the product, and a product end of life phase. The aim of the present invention is to manage information pertaining to the product throughout the lifecycle phases of the product through data management and extraction of contextual insights from the knowledge graph that understands the aspects of circularity and recommend one or more action to design, manufacture, operate, use, reuse, recycle, refurbish one or more components of the product to enable circular economy framework in the product lifecycle.

The method comprises determining one or more features for a given phase of the lifecycle of the product based on information associated with a unique identifier of the product. The information is stored in a knowledge graph comprising semantic information pertaining to properties and behavior of the one or more components of the product at each phase of the lifecycle of the product. The unique identifier may be a value or code that uniquely identifies the product and all associated information in the industrial environment. In an embodiment, the unique identifier is assigned to one or more entities in the industrial environment. The unique identifier is linked to the knowledge graph such that all information pertaining to a given product can be identified by traversing the knowledge graph via the unique identifier. In an exemplary embodiment, the unique identifier may comprise information such as product name/number, manufacturer details, manufacturer article number, temporal information, GTIN or EAN number, CAS number, etc. In an example, the product is a "motor", then the motor is associated with the unique identifier. The one or more components of the product such as power supply, field magnet, armature, rotor, commutator, brushes, axle, etc are all linked to the same unique identifier. Furthermore, the constituent materials such as iron, magnet, plastics, etc. are all linked to the same unique identifier. Furthermore, the one or more entities associated with the product such as designer, manufacturer, supplier of materials, etc. are also associated with the same unique identifier. It will be appreciated that any information pertaining to a particular product that is stored in the knowledge graph is associated with the same unique identifier such that the one or features of the product can be extracted based on a query of the user or a requirement of the user.

In an embodiment, the method of determining one or more features for a given phase of the life-cycle of the product comprises determining the life-cycle phase to be initiated for the product at a given point in time for a geographical region and operating conditions of the product. When a user requests for recommendations for processes to be executed in the product lifecycle, the system 100 may automatically detect the phase the product is in currently and then extract one or more features for the determined phase of the lifecycle of the product. In an example, when the phase is determined as 'design phase', then the one or more features extracted from the knowledge graph are from the design phase of the product.

In an embodiment, the one or more features for the phase of the lifecycle of the product is at least one of: physical properties of the materials of the product, chemical properties of the materials of the product, biological properties of the properties of the product, design and production information, legal compliance requirements of the product, transportation and logistics information, usage and operation information of the product, disassembly and reversibility information of the product, and reuse and recycling information of the product.

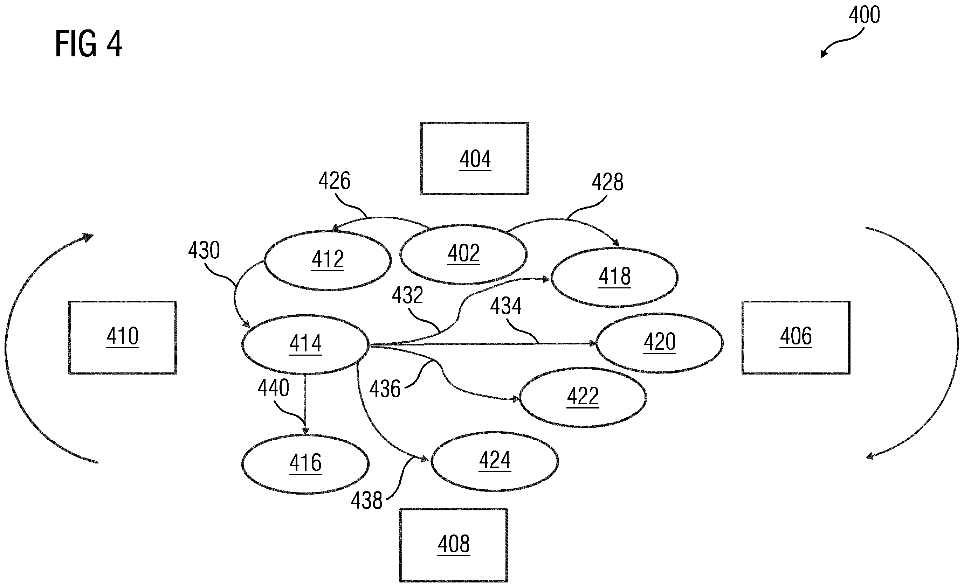

Throughout the present disclosure, the term 'knowledge graphs' as used herein refers to a knowledge base that may be represented by using a visually appealing graphical presentation. Knowledge graph organizes information in the form of nodes and edges. The knowledge graph may be a directed labeled graph having associated domain specific meanings with nodes and edges. Anything can act as a node, for example, people, company, computer, etc. An edge label captures the relationship of interest between the nodes, for example, a friendship relationship between two people, a customer relationship between a company and person, or a network connection between two computers, etc. In the context of the present invention the one or more nodes may be product, one or more components, storage, material, logistics, property, policy, method, and so forth. The one or more edges maybe the relationships between different nodes for example, relationships like: consists of, made of, stored as, complies to, transported as, and the like. The knowledge graph serves as a data structure in which an application stores the information pertaining to the product throughout the lifecycle. The information could be added to the knowledge graph through a combination of human input, automated and semi-automated methods. In a preferred embodiment, the semantically linked knowledge graph representation is based on the W3C semantic web stack that adheres to a pre-defined ontology capturing domain knowledge of the product. The knowledge graph is generated based on an ontology as explained later in FIG. 4. The semantic representation of the knowledge graph is based on an ontology expressed in the W3C standard-based Web Ontology Language (OWL) that allows to express the domain with all the entities (product, materials, suppliers, operators, etc.) therein along with the inter-relationships, enriched by underlying axioms and restrictions. Semantic Web uses a combination of modal and ontology languages to provide the capabilities of an ontology. The ontology uses a predefined, reserved vocabulary to define classes and relationships between them for a particular region of interest or more. The Resource Description Framework Schema (RDFS) (e.g., RDF vocabulary description language 1.0: RDF schema) defined by the world Wide Web Consortium (W3C) provides a specific vocabulary for Resource Description Frameworks (RDFs) that can be used to define classes and attributes. The Web ontology language (OWL) expands the RDFS vocabulary with additional resources that can be used to build more expression ontologies for the Web. RDF is a framework for representing information in the web. RDF is essentially a data model. Its basic building block is a resource attribute value triple, called a statement. RDF has been given XML, JSON, etc. syntax.

The one or more features of the product can be determined from the knowledge graph based on a request from the user. In an example, the user can request one or more recommendations for material selection for the product in the manufacturing phase, then the one or more features pertaining to the manufacturing phase of the product are extracted from the knowledge graph. The one or more features are extracted from the knowledge graph using multiple techniques known in the art.

In an embodiment, the method of generating the knowledge graph comprises creating an ontology. The knowledge graph is generated based on the ontology. The ontology comprises one or more nodes having semantic information pertaining to properties and behavior of the one or more components of the product at each lifecycle phase of the product. The method of creating an ontology comprises assigning one or more classes to the one or more nodes of the ontology. Each of the one or more nodes have data attributes. The method of creating an ontology comprises determining relationships between the one or more nodes. The relationships correspond to object properties of the ontology. Once the one or more nodes and corresponding relationships are determined, the ontology is created based on the one or more classes and relationships therebetween. An example of one such ontology is depicted in FIG. 4.

Referring to FIG 4, illustrated is a graphical representation depicting an ontology 400 created for a product 402 in the industrial environment, in accordance with an embodiment of the present invention. In this particular exameple, the product 402 goes through different phases such as design phase 404, manufacturing phase 406, operation & usage phase 408, and recycling phase 410. The ontology 400 comprises one or more nodes 402, 412, 414, 416, 418, 420, 422, and 424. The one or more nodes are semantically linked to each other via relationships or edges 426, 428, 430, 432, 434, 436, 438 and 440. The one or nodes are assigned to one or more classes such as product 402, component 412, material 414, method 416, storage 418, logistics 420, property 422, and policy 424. The node 402 assigned to class 'product' is linked to the node 412 assigned to class 'component' via the edge 426 representing the relationship 'consists of'. The node 402 assigned to class 'product' is linked to the node 418 assigned to class 'Storage' via the edge 428 representing the relationship 'stored as'. The node 412 assigned to class 'Component' is linked to the node 414 assigned to class 'Material' via the edge 430 representing the relationship 'made of'. The node 414 assigned to class 'Material' is linked to the node 416 assigned to class 'Method' via the edge 440 representing the relationship 'has circularity'. The node 414 assigned to class 'Material' is linked to the node 418 assigned to class 'Storage' via the edge 432 representing the relationship 'stored as'. The node 414 assigned to class 'Material' is linked to the node 420 assigned to class 'Logistcs' via the edge 434 representing the relationship 'transported as'. The node 414 assigned to class 'Material' is linked to the node 424 assigned to class 'Property' via the edge 436 representing the relationship 'has property'.The node 414 assigned to class 'Material' is linked to the node 424 assigned to class 'Policy' via the edge 438 representing the relationship 'complies to' It will be appreciated that the ontology 400 as illustrated here is only an example. The number of nodes and edges, and the types of classes, object properties can be altered to generate a new ontology as per requirement of the industrial environment. Therefore, FIG 4 should not be considered limiting to the claims appended herein.

According to an embodiment, the method further comprises generating the knowledge graph based on the ontology. The knowledge graph is generated using data from one or more data sources associated with development and operation of the product through different phases of the lifecycle of the product. The method of generating the knowledge graph comprises acquiring data from one or more data sources associated with development and operation of the product through different phases of the lifecycle of the product. The term 'one or more data sources' as used herein refers to electronic devices configured to obtain and transmit the data to the processing unit. Non-limiting examples of data sources include sensors, controllers, edge devices, databases, and simulators that can provide data pertaining to development and operation of the product through different phases of the lifecycle of the product. Herein, the data comprises at least one of: physical properties of materials of the product, chemical properties of the materials of the product, biological properties of the properties of the product, design and production information, transportation and logistics information, usage and operation information of the product, disassembly and reversibility information of the product, and reuse and recycling information of the product. In an embodiment, the one or more data sources are connected via a blockchain network. Hence, the data received from such data sources is validated for authenticity and accuracy, thereby improving the accuracy and relevancy of the one or more recommendations determined by the system 100.

The method of generating the knowledge graph based on the ontology comprises associating the acquired data to the one or more nodes and one or more links between the one or more nodes based on semantic relationships between the data. Such semantic relationships between the data can be determined based on the ontology created for the industrial environment. Further, the method comprises classifying the one or more nodes into one or more categories corresponding to one or more phases of the lifecycle of the product. The one or more categories may be at least one of: a design phase of the product, a sourcing phase of the product, a manufacturing phase of the product, a processing phase of the product, a storage phase of the product, a transportation phase of the product, an operation phase of the product, and a product end of life phase. Further, the method comprises arranging the one or more nodes into one or more layers under the one or more categories by establishing a relationship between different lifecycle phases of the product based on the classification. Further, the method comprises generating the knowledge graph from the collected data based on the arrangement and the created ontology.

In an embodiment, the method of generating the knowledge graph from the created ontology further comprises extending the ontology based on a set of requirements, wherein the set of requirements is at least one of: specific industrial domain, specification of the product, or a combination thereof. The method comprises generating the knowledge graph based on the extended ontology. It will be appreciated that the ontology is not limited to only one product, domain, or industrial environment. The ontology can be extended to multiple products, domains, and industrial environment based on the set of requirements from the user. Therefore, the present invention is capable of managing information of multiple products in different industrial environments and recommending one or more actions to enable circular economy framework.

In an exemplary embodiment, the knowledge graph comprises a plurality of pre-linked data objects indicative of the product, one or more components of the product, properties of one or more components of the product, and behaviour of the one of more components of the product. The knowledge graph includes information pertaining to physical properties of materials of the product. The physical properties may include dimensions, structural data, physics, optical properties, durability, and so forth pertaining to the product. In an example, the knowledge graph may include semantic information pertaining to measurements, weight, area, volume, density, etc. for the product and its constituent materials. In another example, the knowledge graph may include semantic information pertaining to compressive strength, load bearing, stability, resistance, tensile strength, and other physical properties of the constituent materials of the product. In another example, the knowledge graph includes semantic information pertaining to thermal conductivity, electrical conductivity, vapor diffusion, porosity, acoustics, color, structure, surface, transmission, transparency, reflectivity, and other physical properties of the constituent material of the product. In another example, the knowledge graph includes physical properties pertaining to expected lifetime, testing, density, heat transfer coefficient, thermal mass, absorption, heat protection, transparency, hygroscopicity, sound insulations & transfer, fire protection, illumination properties, etc. pertaining to the constituent materials of the product.

Additionally, the knowledge graph includes information pertaining to chemical properties of the materials of the product. The chemical properties may inlcude chemical composition, health & safety warnings of the chemical compositions, environmental assessment & risks of the chemical compositions, economic assessment, social assessment, criticality of the material, resistance& stability in different geographical regions and weather conditions pertaining to the constituent material of the product. Furthermore, the knowledge graph includes information pertaining to biological properties of the properties of the product. The biological properties may include biodegradable properties, decomposability, assessment of renewable/ non- renewable elements, assessment of treatment of materials, recycling & re-use potentials pertaining to the constituent material of the product. In an example, the knowledge graph also includes information pertaining to assessment of hazardous substances in a product, such as carcinogenic materials, mutagenic materials, persistent materials, bioaccumulating materials, toxic materials, radiating materials, etc. In another example, the knowledge graph may also include information from various regulatory authorities that classify the material into various categories for human & environmental safety. For an instance, the knowledge graph may include information from REACH (Registration, Evaluation, Authorization and Registration of Chemicals) which is a European regulation addressing the production of chemical substances for production or import into the EU, SVHC(Substances of very high concern), CMR (Carcinogenic Mutagen Reprotoxic) substances that are carcinogenic, mutagenic, and toxic for reproduction, CLP (Classification, labelling, and packaging) EU regulation, GHS (Globally harmonized system of classification, labelling, and packaging of chemicals) which is a worldwide classification and labelling system for hazardous chemical and materials, MSDS (Material safety data sheet) which is a datasheet providing information on the health and safety aspects of a product, TRGS (technical rules for hazardous substances) which is a German system for characterizing and labelling hazardous substances, based on state of the art, health and safety hygiene and other scientific knowledge, material declarations, material databases, bill of materials (BOM) which is direct information from manufacturers and suppliers. It will be appreciated that the knowledge graph is not limited to the aforementioned databases and may include any databases/ regulatory authority data that may be relevant for the product.

Additionally, the knowledge graph includes design and production information of the product. The design information includes designer details, design procedure information, design process information, design tools information, design material information and so forth. The production information includes manufacturer & supplier information, material product composition, manufacturing process & techniques, installation & handling instructions, digitization, certifications, and so forth. In an example, the knowledge graph includes material safety data sheets, technical data sheets, declaration of performances, handling and installation instructions, company certifications, etc. pertaining to the constituent materials of the product. The knowledge graph also includes information pertaining to production procedure, material flow analysis, lifecycle data, criticality of the resources, recycled content information, etc. pertaining to the constituent materials of the product.

Furthermore, the knowledge graph includes semantic information pertaining to transportation and logistics information of the product. The transportation and logistics information may include dimension & weight information, required vehicles, required mode of transportation, required tools, health & safety requirements, storage requirements, information flows, supply chain information, responsibilities between different stakeholders, supply chain mapping, transport distances, carbon footprint, reverse logistics & take-back systems, risk assessment, traceability & packaging instructions, handling instructions, etc. associated with the product and the constituent materials of the product.

Additionally, the knowledge graph includes semantic information pertaining to the usage and operation information of the product. The usage & operation information may include, critical parameters and their operating conditions, cleaning & maintenance instructions, material properties, warranties, service life & expected use times, availability of spare parts, monitoring & consumptions of resources such as energy, water, and others, other influences such as fire, flooding, etc. that may have impact on the product pertaining to the constituent materials of the product.

Furthermore, the knowledge graph also includes semantic information pertaining to the health and safety information of the product during designing, production, usage, operation, or consumption. The health & safety information may include legislation & policies related to human safety and environmental safety. Moreover, the knowledge graph includes information pertaining to disassembly and reversibility information of the product. The disassembly and reversibility information includes disassembly process such as extraction methods, specialized knowledge, specific skills and cost of disassembly. The knowledge graph also includes information such as required tools, transportation modes, storage requirements and labor required in disassembly and handling of the product. Further, the knowledge graph also includes material & product composition i.e. listing of potentially harmful substances and associated health risks. Additionally, the knowledge graph also includes semantic information pertaining to reuse and recycling information of the product such as ease of re-cycling, methods & procedure for re-cycling, the by-products of re-cycling etc. pertaining to the product and the constituent materials of the product.

At step 204, one or more performance indicators pertaining to the circular economy framework in the industrial environment are determined based on the determined one or more features from the knowledge graph for the given phase of the lifecycle of the product. The one or more performance indicators are indicative of sustainability parameters in the industrial environment. The one or more performance indicators may be determined based on use of renewable materials, use of material with recycle content, use of regional products, use of components that can be recycles or re-used, use of material produced with minimal energy, use of materials with long residence times, reduction of material with hazardous waste, reduction of waste in manufacturing, avoiding materials that release pollutants, avoiding materials that negatively impact the environment and so forth.

In an example, the performance indicator is a sustainability index that can be calculated based on waste reduction score, material circularity score, environmental impact score, legal compliance score and the like. The sustainability index can be calculated based on different parameters. For instance, the sustainability index can be calculated using four different scores: waste reduction score, material circularity score, environmental impact score, legal compliance score The waste reduction score may include factors such as percentage of waste materials generated (e.g., product and/or process), water waste, land waste, toxic waste reduction, and any other factor that relates to the environmental impact of a product or process. The material circulartiy score includes factors such as choice of material (such as recyclable or non-recyclable), supplier of material (for eg. Uses ecofriendly procedures or not), recyclability (e.g., component, packaging, etc.), transportation of materials (for eg. from a nearby area from place of production or not), use of material (for example, re-introduction of materials into the production cycle or not), ease of disassembly, purity of constituent materials, inherent redesigning innovation, and any other factor relating to circularity of material in the product lifecycle.

The environmental compliance score may include factors such as resource consumption, like water, air, gas, electricity, and steam (e.g., WAGES). In addition, the environmental compliance score may include carbon footprint of the product, and ecological footprint of the product. The legal compliance score may include health and safety requirements, social responsibility, hazardouus substance classification and usage, government policies and legislations, certifications, and any other compliances that impact the product, consumers and workers. Further, the legal compliance score may include diversity factors (e.g., employment of minorities) for employers, training scores (e.g., skilled versus unskilled labor), union labor scores (e.g., use of union vs. non-union labor), fair labor practices, lost work day case rate (e.g., LWDCR, work related injuries and illnesses that result in the employee not being able to perform work), recordable case rate (e.g., RCR, work related injury or illness requiring attention beyond first aid), or most any other factor that relates to the safety performance of a product, machine, organization, and so forth.

At step 206, one or more actions are recommended for the given phase of the lifecycle of the product based on the knowledge graph such that the determined one or more performance indicators are within a predefined range enabling circular economy framework in the industrial environment. In an embodiment, the one or more recommendations are generated by querying the knowledge graph using natural language processing techniques. In another embodiment, the one or more recommendations are generated by inferencing contextual insights from the knowledge graph. As used herein, the term "inferencing" refers generally to the process of reasoning about or inferring states of the product, environment, and/or user from a set of observations as captured via events and/or data stored in the knowledge graph. Inferencing can be employed to identify a specific context or action, or can generate a probability distribution over states, for example. The inference can be probabilistic-that is, the computation of a probability distribution over states of interest based on a consideration of data and events. Inference can also refer to techniques employed for composing higher-level events from a set of events and/or data. Such inference results in the construction of new events or actions from a set of observed events and/or stored event data, whether or not the events are correlated in close temporal proximity, and whether the events and data come from one or several event and data sources. Furthermore, inference can be based upon logical models or rules, whereby relationships between components or data are determined by an analysis of the data and drawing conclusions there from. For instance, by observing that one supplier always provides materials that are transported from a far-off place, it may be determined or inferred that this supplier provides materials with higher carbon footprint.

In one or more examples, directed and undirected model classification approaches including machine learning models, for example, naive Bayes, Bayesian networks, decision trees, neural networks, fuzzy logic models, and probabilistic classification models providing different patterns of independence can be employed for inferencing. Classification as used herein also is inclusive of statistical regression that is utilized to develop models of priority. The machine learning models are trained to identify patterns in the knowledge and determine missing links and relationships between nodes in the knowledge graph to inference new information. This new information can then be used to recommend one or more actions to enable circular economy framework.

In an embodiment, recommending the one or more actions for the determined lifecycle phase of the product comprises at least one of: material selection for manufacturing, supplier selection for sourcing material, resource planning, circular product design, material recovery, material reuse, reduction of costs, and reduction of waste material. In an example, the recommendation based on contextual insights from the knowledge graph can be 'If a product has a plastic body, then the body of the product can be recycled'. In another example, recommendation based on contextual insights from the knowledge graph can be 'If a product functions in a corrosive environment, then steel cannot be used to ensure extended life of the product'. In another example, recommendation based on contextual insights from the knowledge graph can be 'If a product is made of a certain metal, then it can be recovered at the end of life to discourse new mining of such a metal'. In another example, recommendation based on contextual insights from the knowledge graph can be 'If a product or material is exposed to humidity, then its value degrades delivering lesser value and hence propose an environment friendly means of recovering the product or preventing it from being exposed'.

In an embodiment, recommending the one or more actions based on the determined one or more features of the product further comprises determining a type and supplier of material based on the determined one or more performance indicators to enable circular economy framework in the industrial environment. In an example, for an industrial plant wherein products are expose to humidity, the choice of material can be non-ferrous alloys or plastics. Further, a supplier is also chosen based on low carbon footprint score, use of recycled materials, adherence to environmental and legal compliances in order to improve sustainability index. Once, the type of material and supplier of material are determined, the type of material and supplier of material can be presented to the user on a graphical user interface.

In another embodiment, recommending one or more actions based on the determined one or more features of the product further comprises determining a type of source of the determined material for manufacturing the product. Herein, the type of source of material as at least one of: primary source, secondary source, or a combination thereof based on the one or more parameters to enable circular economy framework in the industrial environment. Herein, the primary source is the source that provides virgin materials that have not been used in any product before. The secondary source is the source that provides recycled material that are being re-used in the product. Further, the method comprises recommending the type of source of the determined material for manufacturing the product to the user on the graphical user interface. In an example, the recommendation is to use recycle materials such as recycled plastics from a secondary source for manufacturing a toy. Furthermore, the recommendation is to use virgin plastics for manufacturing heavy machinery for a critical task.

In another embodiment, recommending the one or more actions based on the determined one or more features of the product comprises predicting one or more anomalies in the one or more components of the product based on the one or more features derived from the generated knowledge graph. Further, the method comprises recommending one or more actions based on the predicted anomalies to enable circular economy framework in the industrial environment. In an example, the one or more anomalies can be rusting of iron in a very humid geographical area, hence the recommendation could be use non-ferrous alloys or metals in a product to be used in the humid geographical area that is prone to rusting.

In another embodiment, recommending the one or more actions based on the extracted one or more features of the product further comprises determining a pattern in frequently occurring anomalies in the one or more components of the product during an operation phase of the product. The anomalies in the product may be degradation of one or more components of the product, decrease in efficiency of the product, decrease remaining useful life of the product, change in some critical parameters of the one or more components of the product, and so forth. The method comprises identifying a link between the frequently occurring anomalies in the one or more components of the product and a particular feature of the product extracted from the knowledge graph based on the unique identifier of the one or more components of the product. Further, the method comprises recommending one or more actions to amend product development process in order to reduce frequently occurring anomalies in the one or more components of the product during the operation phase. In an example, the apparatus 110 is capable of identifying anomalies such as degradation is useful life of a machinery because of use of materials from a particular supplier, then it can be inferenced from the knowledge graph that there is a link between the degraded quality of some batches of products and a corresponding supplier, then the recommendation can be to choose a supplier of materials of higher quality.

In another embodiment, recommending the one or more actions based on the extracted one or more features of the product further comprises determining a severity of the determined anomalies of the one or more components of the product. Further, the method comprises recommending whether a component of the product is to be repaired or replaced based on the determined severity of the determined anomalies of the one or more components of the product. In an example, the apparatus 110 is capable of classifying the determined anomalies into different level of severity such as low, medium, and high. Based on the severity level of the anomalies, it can be inferred from the knowledge graph that which components of the product are to be repaired or replaced to improve the remaining useful life of the product during the operation phase of the product.

In another embodiment, recommending the one or more actions based on the determined one or more features of the product further comprises classifying the one or more components of the product under one or more labels based on the generated knowledge graph to enable circular economy framework in the industrial environment, wherein the one or more labels is any one of: to be reused, to be recycled and to be discarded. Further, the method comprises recommending the one or more actions to re-introduce the one or more replaced components of the product into the product development lifecycle based on the classification. In an example, after the end of life phase of the product, the product can be recommended to be disassembled. The one or more features from the knowledge graph can then be inferenced to label the different components & its constituent materials into one or more labels as: to be reused, to be recycled, and to be discarded. Advantageously, the invention ensures that the product is handled in a sustainable manner after the end of life phase of the product such that more and more constituent materials and be re-introduced into the lifecycle of the product.

In another embodiment, recommending one or more actions based on the determined one or more features of the product further comprises classifying one or more components of the product to be re-processed as hazardous or non-hazardous based on the knowledge graph in order to adhere legal compliance and environmental compliances. Further, the method comprises recommending one or more actions to process hazardous and non-hazardous components separately. In an example, if a particular material used in a product is radioactive, then the material is classified as hazardous and method to process such hazardous material can be inferenced from the knowledge graph.

In another embodiment, the method further comprises optimizing the product development life-cycle in order to improve sustainability index to ensure circular economy framework. The optimization of the product development lifecycle over a period of time can be done by material flow analysis (MFA) of the materials used in the entire lifecycle of the product by extracting relevant information from the knowledge graph. The material flow analysis of the product will help in quantifying the flows and stocks of materials over space and time. It helps in identifying the sources of materials, pathways of materials and ultimate sinks of materials. Thereby, the invention aims to use the knowledge graph to identify various patterns in resource usage, material losses, waste creation, etc. The material flow analysis using knowledge graph helps in tracking materials, measure accumulation in different lifecycle phases, balancing industrial input and output to natural ecosystem capacity, reducing material use, creating loop-closing industrial practices, controlling pathways for material use, resource management, process chain analysis, balancing flows between anthropo-sphere and environment, modelling elemental composition of products and wastes, balancing dispersal and emission of certain gases, and so forth. The insights from the knowledge graph can be used to assess the goal of the product and define a product development & improvement plan, strategic planning, public policy making and marketing strategies for the product.

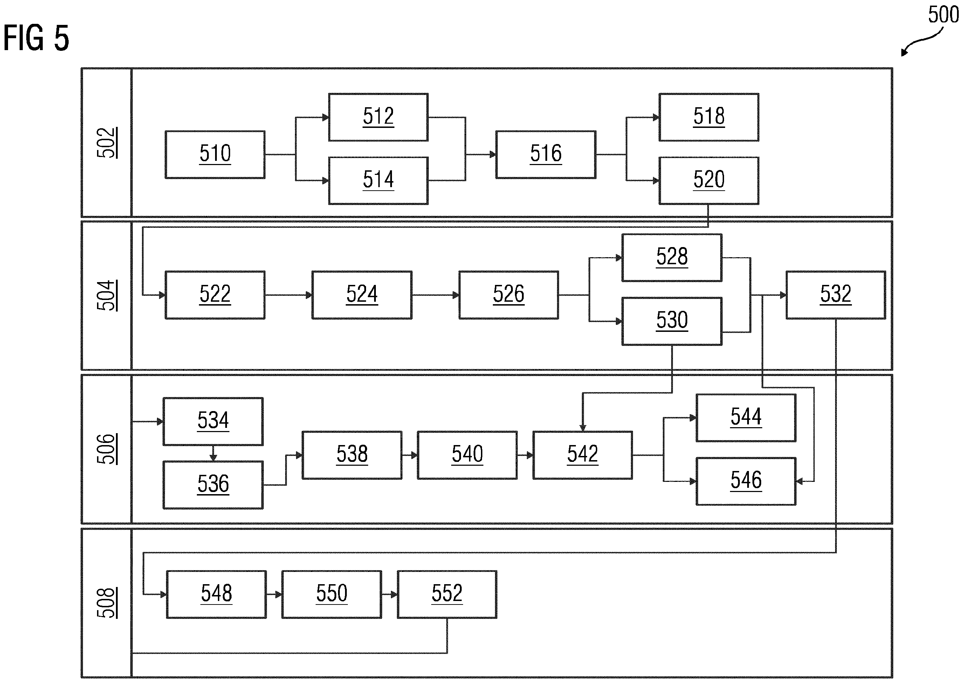

Referring to FIG 5, illustrated is flowchart 500 depicting interaction between different life-cycle phases of the product in the industrial environment, in accordance with an embodiment of the present invention. As shown different phases of the lifecycle of a given product are design phase 502, manufacturing phase 504, processing phase 506, and operation phase 508 that are linked to each other. The design phase 502 comprises information pertaining to product design 510, operating condition 512, operating geographical conditions 514, material choice 516, recovered metal 518, and recycled plastic 520. The manufacturing phase 504 comprises information pertaining to design availability 522, material sourcing 524, inventory & owner 526, contract formulation 528, placing order 530 and assembling product to customer 532. The processing phase 506 comprises information pertaining to collection of product 534, dismantling of product 536, receive inventory 538, appropriate processing 540, processed inventory 542, receiving order 544, ad shipping order 546. The operation phase 508 information pertaining to product usage 548, end of life of product 550, and notification to processors 552.

In an exemplary implementation, the present invention aims to provide an automatic AI recommendation engine leveraging semantic information from the knowledge graph that provides contextual insights/ decision support to different stakeholders in the industrial environment throughout the lifecycle of the product. It will be appreciated that contextual insights are recommended to the user based on the role of the user in the industrial environment. For example, if the user is a "designer", then the system 100 will provide recommendations to the user that are related to the design & modelling phase of the product. For instance, the recommendations may be around providing different design choices by matching material property with operating conditions or geographical compliance requirements. In another example, if the user is a "manufacturer" then the system 100 will provide recommendations to the user that are related to the manufacturing phase of the product. For instance, the recommendations may be around leveraging the right inventory from the right supplier such that sustainability index is within predefined threshold. In another example, if the user is a "material processor" then the system 100 will provide recommendations to the user that are related to the end of life phase of the product. For instance, the recommendation may be to use the right method for processing hazardous materials.

In another exemplary implementation, the invention aims to provide an interactive virtual assistant based on contextual semantic search and query performed on the knowledge graph. In an example, the user can query the knowledge graph to filter out a set of entities, set of products, set of materials, set of suppliers, set of manufacturers and so forth. For instance, the user can search for "all products manufactured by Siemens that use soft iron sourced from Australia". In another instance, the user can search for "select all products manufactured or shipped in EU region by Siemens that contain Cadmium compounds present in the REACH hazardous chemicals list". As per the query, the apparatus 110 may query the knowledge graph and provide the requested results.

In another exemplary implementation, the invention aims to provide a sustainability dashboard for providing insights for a particular product, or multiple products owned by an organization. The organization and/or individual users may choose one or more performance indicators for enabling performance indicators that are required to be monitored such that a user-customized dashboard is presented to the user. In an example, the one or more performance indicators may be a waste reduction score, material circularity score, environmental impact score, legal compliance score. Such performance indicators can be calculated in real-time and presented on the graphical user interface as a dashboard. Furthermore, the one or more recommendations to optimize the product development lifecycle can also be determined and presented on the dashboard to enable circular economy framework.

The present invention aims to provide one or more recommendations for a product throughout the entire lifecycle of the product to enable the circular economy framework. The present invention is capable of providing a leveraging a knowledge base having heterogeneous data about products/materials, their properties, their processing capabilities, behaviors under different operating, storage and transportations conditions, adherence to compliance related to such factors across geographic regions and so on. Advantageously, heterogeneous data in the arranged in the knowledge graph enables to gain timely and effective insights for decision making and supply chain interactions. Beneficially, the present invention provides an efficient and seamless method of management of heterogenous data that is authentic and accurate for different lifecycle phases of the product. Beneficially, the present invention is not limited to a particular industry vertical and provides a scalable solution. Advantageously, the present invention provides real-time monitoring of performance indicators pertaining to sustainability that guides in choosing the right materials, processes, methods, tools, etc. for the product. The present invention may take the form of a computer program product comprising program modules accessible from computer-usable or computer-readable medium storing program code for use by or in connection with one or more computers, processors, or instruction execution system. For the purpose of this description, a computer-usable or computer-readable medium is any apparatus 110 that may contain, store, communicate, propagate, or transport the program for use by or in connection with the instruction execution system, apparatus 110, or device. The medium may be electronic, magnetic, optical, electromagnetic, infrared, or semiconductor system (or apparatus 110 or device) or propagation mediums in and of themselves as signal carriers are not included in the definition of physical computer-readable medium include a semiconductor or solid state memory, magnetic tape, a removable computer diskette, random access memory (RAM), a read only memory (ROM), a rigid magnetic disk and optical disk such as compact disk read-only memory (CD-ROM), compact disk read/write, and DVD. Both processors and program code for implementing each aspect of the technology may be centralized or distributed (or a combination thereof) as known to those skilled in the art.

While the invention has been illustrated and described in detail with the help of a preferred embodiment, the invention is not limited to the disclosed examples. Other variations can be deduced by those skilled in the art without leaving the scope of protection of the claimed invention.

### List of reference numbers:

100 system for recommending one or more actions to enable a circular economy framework across a lifecycle of a product
105 database
110 apparatus
115 network
120 user device
135 processing unit
140 memory unit
145 storgae unit
150 database
155 input unit
160 output unit
165 module
170 tagging module
175 knowledge graph generation module
180 extraction module
185 performance indicator determination module
190 recommendation module
195 bus
200 method for recommending one or more actions to enable a circular economy framework across a lifecycle of a product
300 flowchart of a state of the art framework of linear model and circular model in an industrial environment
400 graphical representation depicting an ontology
500 flowchart depicting interaction between different life-cycle phases of the product in the industrial environment

## Claims

1. A method (200) for recommending one or more actions to enable a circular economy framework (302B) across a lifecycle of a product comprising one or more components in an industrial environment, the method comprising:
determining, by a processing unit (135), one or more features for a given phase of the lifecycle of the product based on information associated with a unique identifier of the product, wherein the information is stored in a knowledge graph comprising semantic information pertaining to the product, one or more components of the product, properties of the one or more components of the product and behavior of the one or more components of the product at each lifecycle phase of the product; and
determining, by the processing unit (135), one or more performance indicators pertaining to the circular economy framework in the industrial environment based on the determined one or more features from the knowledge graph for the given phase of the lifecycle of the product;
recommending one or more actions for the given lifecycle phase of the product such that the determined one or more performance indicators are within a predefined range enabling circular economy framework in the industrial environment.

2. The method (200) according to claim 1, further comprising generating the knowledge graph based on an ontology (400) comprising one or more nodes having semantic information pertaining to the product, the one or more components, properties of the one or more components, and behavior of the one or more components of the product at each lifecycle phase of the product, wherein creating the ontology comprises:
assigning one or more classes to the one or more nodes of the ontology (400), wherein each of the one or more nodes have data attributes;
determining relationships between the one or more nodes, wherein the relationships correspond to object properties of the ontology; and
creating an ontology based on the one or more classes and relationships therebetween.

3. The method (200) according to claim 1, comprises generating the knowledge graph using data from one or more data sources associated with development and operation of the product through different phases of the lifecycle of the product, wherein generating the knowledge graph based on the ontology comprises:
collecting data from one or more data sources associated with development and operation of the product through different phases of the lifecycle of the product, wherein the data comprises at least one of: physical properties of materials of the product, chemical properties of the materials of the product, biological properties of the properties of the product, design and production information, transportation and logistics information, usage and operation information of the product, disassembly and reversibility information of the product, and reuse and recycling information of the product;
associating the collected data to the one or more nodes and one or more links between the one or more nodes based on semantic relationships between the data;
classifying the one or more nodes into one or more categories corresponding to one or more phases of the lifecycle of the product;
arranging the one or more nodes into one or more layers under the one or more categories by establishing a relationship between different lifecycle phases of the product based on the classification;
generating the knowledge graph from the collected data based on the arrangement and the created ontology.

4. The method (200) according to any of the preceding claims, wherein the lifecycle phases of the product comprise at least one of: a design phase of the product, a sourcing phase of the product, a manufacturing phase of the product, a processing phase of the product, a storage phase of the product, a transportation phase of the product, an operation phase of the product, and a product end of life phase.

5. The method (200) according to any of the preceding claims further comprising assigning the unique identifier to one or more entities in the industrial environment, wherein the unique identifier is linked to the generated knowledge graph.

6. The method (200) according to any of the preceding claims, wherein the one or more features for the determined lifecycle phase of the product is at least one of: physical properties of the materials of the product, chemical properties of the materials of the product, biological properties of the properties of the product, design and production information, legal compliance requirements of the product, transportation and logistics information, usage and operation information of the product, disassembly and reversibility information of the product, and reuse and recycling information of the product.

7. The method (200) according to any of the preceding claims, wherein recommending one or more actions for the determined lifecycle phase of the product comprises at least one of: material selection for manufacturing, supplier selection for sourcing material, resource planning, circular product design, material recovery, material reuse, reduction of costs, and reduction of waste material.

8. The method (200) according any of the preceding claims, wherein recommending one or more actions based on the determined one or more features of the product further comprises:
determining a type of material and supplier of material based on the determined one or more performance indicators to enable circular economy framework in the industrial environment; and
recommending the determined type of material and supplier of material to a user on a graphical user interface.

9. The method (200) according to any of the preceding claims, wherein recommending one or more actions based on the determined one or more features of the product further comprises:
determining a type of source of the determined material for manufacturing the product, wherein the type of source of material as at least one of: primary source, secondary source, or a combination thereof based on the one or more parameters to enable circular economy framework in the industrial environment; and
recommending the type of source of the determined material for manufacturing the product to the user on a graphical user interface.

10. The method (200) according to any of the preceding claims, wherein recommending one or more actions based on the determined one or more features of the product comprises:
predicting one or more anomalies in the one or more components of the product based on the one or more features derived from the generated knowledge graph;
recommending one or more actions based on the predicted anomalies to enable circular economy framework in the industrial environment.

11. The method (200) according to any of the preceding claims, wherein recommending one or more actions based on the determined one or more features of the product further comprises:
determining a pattern in frequently occurring anomalies in the one or more components of the product during an operation phase of the product;
identifying a link between the frequently occurring anomalies in the one or more components of the product and a particular feature of the product extracted from the knowledge graph based on the unique identifier of the one or more components of the product;
recommending one or more actions to amend product development process in order to reduce frequently occurring anomalies in the one or more components of the product during the operation phase.

12. The method (200) according to any of the preceding claims, wherein recommending one or more actions based on the extracted one or more features of the product further comprises:
determining a severity of the determined anomalies of the one or more components of the product; and
recommending whether a component of the product is to be repaired or replaced based on the determined severity of the determined anomalies of the one or more components of the product.

13. The method (200) according to any of the preceding claims, wherein recommending one or more actions based on the extracted one or more features of the product further comprises:
classifying, by the processing unit (135), the one or more components of the product under one or more labels based on the generated knowledge graph to enable circular economy framework in the industrial environment, wherein the one or more labels is any one of: to be reused, to be recycled and to be discarded;
recommending, by the processing unit (135), one or more actions to re-introduce the one or more replaced components of the product into the product development lifecycle based on the classification.

14. An apparatus (110) for recommending one or more actions to enable a circular economy framework across a lifecycle of a product comprising one or more components in an industrial environment, the apparatus comprising:
one or more processing units (135); and
a memory unit (140) communicatively coupled to the one or more processing units, wherein the memory unit comprises module (135) stored in the form of machine-readable instructions executable by the one or more processing units, wherein the module is configured to perform one or more method steps according to the claims 1 to 13.

15. A system (100) for recommending one or more actions to enable a circular economy framework across a lifecycle of a product comprising one or more components in an industrial environment, the system 100 comprising:
a database (105) comprising semantic information pertaining to properties and behavior of the one or more components of the product at each lifecycle phase of the product; and
an apparatus (110) communicatively coupled to the database, wherein the apparatus including a module (165) is configured to perform one or more method steps according to the claims 1 to 13.

16. A computer-program product having machine-readable instructions stored therein, which when executed by one or more processing units (135), cause the processing units to perform a method according to any of the claims 1 to 13.
